# EUROPEAN PATENT APPLICATION

(11) **EP 3 660 758 A1**
(43) Date of publication of application: **03.06.2020**
(21) Application number: 19192606.2
(22) Date of filing: 20.08.2019
(51) Int. Cl.: G06Q 10/06, G06Q 10/00

(54) **SERVER DEVICE AND METHOD**

(30) Priority: 27.11.2018 JP 2018220966
(71) Applicant: Toshiba Tec Kabushiki Kaisha, 141-8562 Tokyo (JP)
(72) Inventor: SHIMAZAKI, Takeshi, Shinagawa-ku, Tokyo 141-8562 (JP)
(74) Representative: Bandpay & Greuter

(57) **Abstract**

According to one embodiment, a server device includes: a data reception unit configured to receive an input of operation data applied to operate an information processing device that performs a predetermined process; a running situation collection unit configured to collect running situations by periods of the information processing device based on the operation data; and a running situation output unit configured to output the running situations by the periods of the information processing device.

## Description

### FIELD

Embodiments described therein relate generally to a server device and a method.

### BACKGROUND

In the related art, maintenance systems in which a maintenance center installed at a location distant from each store performs centralized management for point of sales (POS) terminals running in each store such as convenience stores are known. JP-A-2002-197212 discloses a technology for automatically deciding a day on which a maintenance worker visits and performs maintenance work by acquiring a store schedule (a business schedule of a store manager) and matching the store schedule with a schedule of the maintenance worker.

However, when a day on which maintenance work is performed based on a store schedule (a business schedule of a store manager) is adjusted, the day may overlap with a busy timing of the store and the maintenance worker may not plan the maintenance work.

### SUMMARY OF INVENTION

To solve such problem, there is provided a server device comprising:
a data reception unit configured to receive an input of operation data applied to operate an information processing device that performs a predetermined process;
a running situation collection unit configured to collect running situations by periods of the information processing device based on the operation data; and
a running situation output unit configured to output the running situations by the periods of the information processing device.

Preferably, the operation data is processing time information indicating a time in which the information processing device performs the predetermined process, and
the running situation collection unit collects the running situations by periods of the information processing device based on the processing time information.

Preferably still, the operation data is login time information indicating a time for login taken for the information processing device to perform the predetermined process, and
the running situation collection unit collects the running situations by periods of the information processing device based on the login time information.

Preferably yet, the operation data is power-on time information indicating a power-on time taken for the information processing device to perform the predetermined process, and
the running situation collection unit collects the running situations by periods of the information processing device based on the power-on time information.

Suitably, the operation data includes a history in which maintenance inspection work is performed.

The invention also relates to a method causes a computer to function as:
a data reception unit configured to receive an input of operation data applied to operate an information processing device that performs a predetermined process;
a running situation collection unit configured to collect running situations by periods of the information processing device based on the operation data; and
a running situation output unit configured to output the running situations by the periods of the information processing device.

Preferably, the operation data is processing time information indicating a time in which the information processing device performs the predetermined process.

Preferably still, the operation data is login time information indicating a time for login taken for the information processing device to perform the predetermined process.

Preferably yet, the operation data is power-on time information indicating a power-on time taken for the information processing device to perform the predetermined process.

Suitably, the operation data includes a history in which maintenance inspection work is performed.

The invention also concerns a non-transitory computer readable medium storing a program causing a computer to execute the method described above.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a schematic diagram illustrating a configuration of a POS terminal maintenance system according to an embodiment;
FIG. 2 is a block diagram illustrating a hardware configuration of a POS maintenance computer;
FIG. 3 is a functional block diagram illustrating a functional configuration of a control unit of the POS maintenance computer;
FIG. 4 is a flowchart illustrating a flow of a maintenance period deciding process performed by the control unit of the POS maintenance computer; and
FIG. 5 is a diagram illustrating an example of running situations by periods (each day of week or each period of time) of POS terminals.

### DETAILED DESCRIPTION

Embodiments provide a server device and a method capable of suggesting avoidance of a busy timing of each store when a maintenance work day is adjusted.

In general, according to one embodiment, a server device includes: a data reception unit configured to receive an input of operation data applied to operate an information processing device that performs a predetermined process; a running situation collection unit configured to collect running situations by periods of the information processing device based on the operation data; and a running situation output unit configured to output the running situations by the periods of the information processing device.

Hereinafter, embodiments of a server device and a method will be described in detail with reference to the following appended drawings.

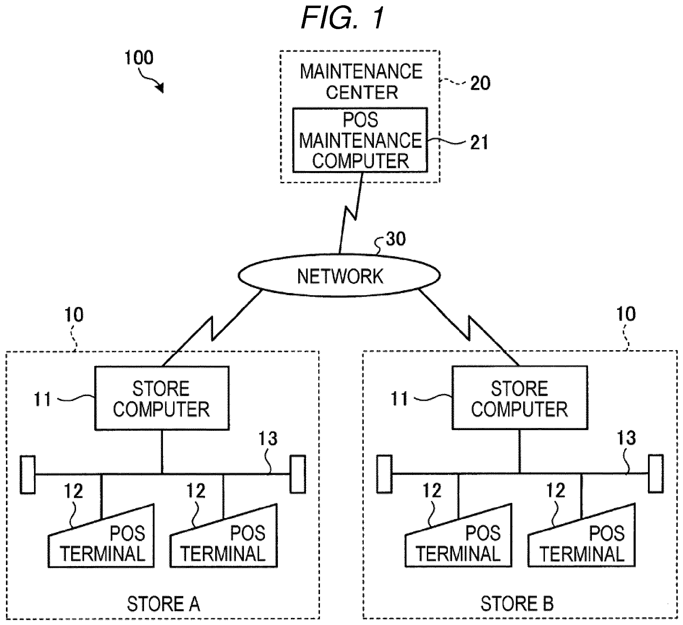

FIG. 1 is a schematic diagram illustrating a configuration of a POS terminal maintenance system 100 according to an embodiment. As illustrated in FIG. 1, in the POS terminal maintenance system 100, a store computer 11 of each POS system 10 constructed in each store and a POS maintenance computer 21 of a maintenance center 20 installed at a location away from each store are connected by a network 30 such as the Internet to be able to communicate each other.

POS terminals 12 in a self-store are all connected to the store computer 11 of each store via a local area network (LAN) 13. The POS terminal 12 is an example of an information processing device.

The POS terminal 12 includes a scanner, a keyboard, an operator display, a customer displayer, a printer that prints receipts and journals, and a hard disk drive (HDD) device. The POS terminal 12 is a terminal that performs a process of selling and registering commodities based on commodity codes input by an operator (cashier). The POS terminal 12 performs a transaction process related to selling of commodities sold in the store as a predetermined process. The transaction process refers to a process combined with a sales registration process and a settlement process.

The sales registration process refers to a process of optically reading codes such as barcodes attached to sold commodities with a scanner, inputting the commodity codes, displaying commodity names or prices (commodity information) of the commodities read from the store computer 11 based on the input commodity codes, and storing the commodity information in a buffer.

The settlement process refers to a process of displaying a sum of money related to transaction based on the commodity information stored in the buffer in association with the sales registration process and calculating and displaying change based on a deposit entrusted by a customer, a process of instructing a change machine to give the change, and a process of issuing a receipt on which the commodity information or settlement information (the sum money, the deposit, and the change, or the like) is printed.

The POS terminal 12 transmits operation data applied to operate the POS terminal 12 to the POS maintenance computer 21 via the store computer 11. Here, the operation data is various kinds of data included in sales data applied to a transaction process transmitted at a fixed time. The operation data also includes maintenance inspection data transmitted in maintenance inspection.

The store computer 11 has a commodity master file in which commodity data such as a commodity code, a commodity name, and a unit price of each commodity sold in each store are stored. The store computer 11 responds to a commodity data inquiry from each POS terminal 12 or collects sales data applied to a transaction process registered in each POS terminal 12 for total sales. The store computer 11 outputs various sales analysis reports.

The POS maintenance computer 21 is an example of a server device. The POS maintenance computer 21 has a function of collecting running situations by periods of the POS terminals 12 installed in each store based on the operation data collected from the POS terminals 12 and the store computer 11 of each store via the network 30. The POS maintenance computer 21 has a function of outputting the running situations by the periods of the POS terminals 12.

Next, a hardware configuration of the POS maintenance computer 21 will be described.

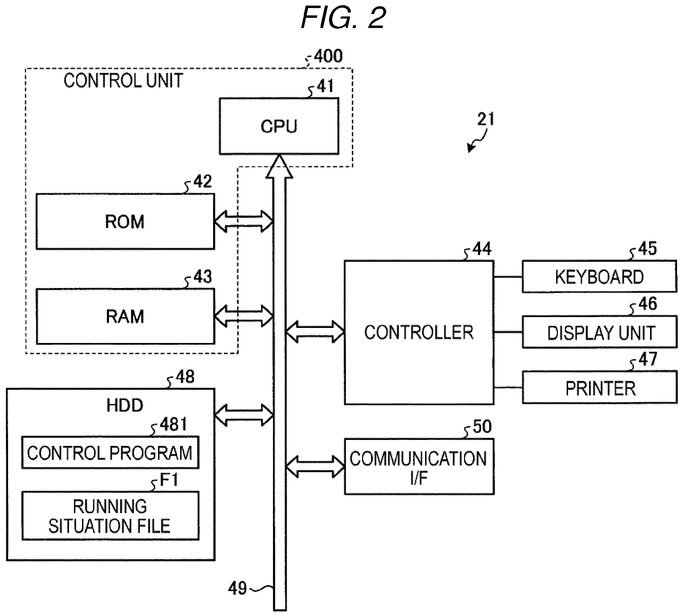

Here, FIG. 2 is a block diagram illustrating a hardware configuration of the POS maintenance computer 21. The POS maintenance computer 21 includes a control unit 400 that has a computer configuration formed by a central processing unit (CPU) 41, a read-only memory (ROM) 42, a random access memory (RAM) 43.

The control unit 400 is connected to a communication interface (I/F) 50 via a bus 49. The POS maintenance computer 21 performs online communication with the plurality of store computers 11 via the communication I/F 50 and the network 30 (see FIG. 1). A keyboard 45, a display unit 46, and a printer 47 are connected to the control unit 400 via the bus 49 and a controller 44.

A hard disk drive (HDD) 48 is connected to the control unit 400 via the bus 49. The HDD 48 stores various control programs 481 causing the control unit 400 to operate. The HDD 48 stores a running situation file F1 for accumulating collection results of running situations by POS numbers specific to terminals allocated to the POS terminals 12 installed in each store and periods of the POS terminals 12.

The control unit 400 collects and updates the running situations by the periods of the POS terminals 12 installed in each store and stored in the running situation file F1 based on the operation data collected from the POS terminals 12 and the store computer 11 in each store via the network 30.

A control program 481 that is executed in the POS maintenance computer 21 according to the embodiment may be a file with an installable format or an executable format and may be recorded on a computer-readable recording medium for supply. The recording medium is a CD-ROM, a flexible disc (FD), a CD-R, a digital versatile disk (DVD), or the like.

Further, the control program 481 that is executed by the POS maintenance computer 21 according to the embodiment may be stored on a computer connected to a network such as the Internet to be downloaded via a network for supply. The control program 481 that is executed by the POS maintenance computer 21 according to the embodiment may be supplied or distributed via a network such as the Internet.

Next, a maintenance period deciding process performed by the control unit 400 of the POS maintenance computer 21 according to an embodiment in accordance with the control program 481 will be described.

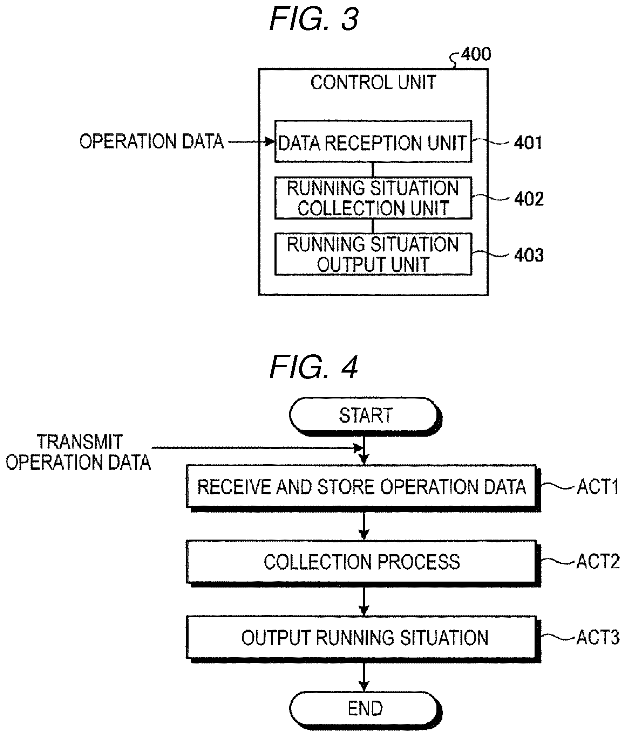

FIG. 3 is a functional block diagram illustrating a functional configuration of the control unit 400 of the POS maintenance computer 21. The control unit 400 functions as a data reception unit 401 that receives data in accordance with the control program 481 stored in the HDD 48, a running situation collection unit 402 that collects running situations, and a running situation output unit 403 that outputs the running situations.

The data reception unit 401 receives an input of operation data applied to operate the POS terminals 12. The operation data is various kinds of data included in sales data applied to a transaction process and transmitted at a fixed time. Specifically, the operation data is sales information indicating a sales amount or the number of customers per POS terminal 12. The operation data is processing time information indicating a time at which the POS terminal 12 performs a transaction process. The operation data is login time information indicating a login time at which the POS terminal 12 performs a transaction process. The operation data is power-on time information indicating a power-on time at which the POS terminal 12 performs a transaction process. The operation data includes a history in which maintenance inspection work is performed on the POS terminal 12.

The running situation collection unit 402 collects running situations by periods of the POS terminal 12 based on the operation data. The running situation collection unit 402 collects running situations by periods of the POS terminal 12 based on the process time information. The running situation collection unit 402 collects running situations by periods of the POS terminal 12 based on the login time information. The running situation collection unit 402 collects running situations by periods of the POS terminal 12 based on the power-on time information.

The running situation output unit 403 outputs the running situations by the periods of the POS terminal 12. More specifically, the running situation output unit 403 displays the running situations by the periods of the POS terminal 12 on the display unit 46. The running situation output unit 403 causes the printer 47 to print the running situations by the periods of the POS terminal 12.

FIG. 4 is a flowchart illustrating a flow of the maintenance period deciding process performed by the control unit 400 of the POS maintenance computer 21.

As illustrated in FIG. 4, each POS terminal 12 installed in each store transmits the operation data to the POS maintenance computer 21 via the store computer 11 at a predetermined timing. As described above, the operation data is various kinds of data included in sales data applied to a transaction process and transmitted at a fixed time. Specifically, the operation data is sales information indicating a sales amount or the number of customers per POS terminal 12. The operation data is processing time information indicating a time at which the POS terminal 12 performs a transaction process. The operation data is login time information indicating a login time at which the POS terminal 12 performs a transaction process. The operation data is power-on time information indicating a power-on time at which the POS terminal 12 performs a transaction process. The operation data includes a history in which maintenance inspection work is performed on the POS terminal 12.

The control unit 400 (the data reception unit 401) of the POS maintenance computer 21 receives the operation data transmitted at the predetermined timing from the POS terminal and stores the operation data in the RAM 43 or the like (ACT1). An input of the operation data to the data reception unit 401 is not limited to the data transmission via the network 30. For example, an input of the operation data to the data reception unit 401 may be an input via the keyboard 45 of the POS maintenance computer 21. The control unit 400 (the running situation collection unit 402) of the POS maintenance computer 21 performs a collection process for maintenance inspection day setting, for example, when an operation of setting a maintenance inspection day is performed by a maintenance worker (ACT2). Specifically, the control unit 400 (the running situation collection unit 402) of the POS maintenance computer 21 performs a collection process related to running of each POS terminal 12 in each store based on the operation data (the processing time information or the like) transmitted from the POS terminal 12. In the collection process, running situations of the POS terminals 12 by the periods (each day of week or each period of time) in each store are collected and the running situation file F1 is updated.

The running situations of the POS terminals 12 by the periods (each day of week or each period of time) in each store, for example, running rates by the periods (each day of week or each period of time) of the POS terminals 12 in each store, are calculated based on the operation data (the processing time information or the like). Then, the control unit 400 (the running situation collection unit 402) of the POS maintenance computer 21 derives periods (days of week or periods of time) in which the running rates are less than predetermined thresholds.

The control unit 400 (the running situation output unit 403) of the POS maintenance computer 21 outputs the running situations of the POS terminals 12 collected in the collection process of ACT2 (ACT3) in each store. The running situation output unit 403 displays the running situations by the periods (each day of week or each period of time) of the POS terminals 12 on the display unit 46 or causes the printer 47 to print the running situations by the periods. The running situations may be realized with graphs.

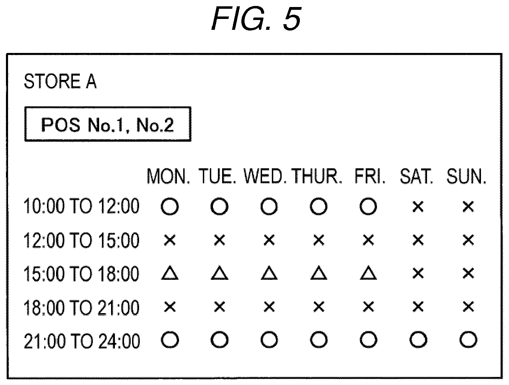

FIG. 5 is a diagram illustrating an example of running situations by periods (each day of week or each period of time) of the POS terminals 12. As illustrated in FIG. 5, as running situations of the POS terminals 12, when there are two POS terminals 12 in store A, periods of time in which customers can be treated using one POS terminal 12 are indicated by "○", periods of time in which customers cannot be treated without using two POS terminals 12 are indicated by "X", and periods of time in which customers cannot be treated using one POS terminal 12 depending on cases are indicated by "Δ".

The maintenance worker checks days of week and periods of time in which maintenance inspection of the POS terminals 12 in the store is possible, based on the running situations (each day of week or each period of time) of the POS terminal 12 in each store generated by the POS maintenance computer 21. Specifically, the maintenance worker determines days of week and periods of time in which running rates of the POS terminals 12 to the total number of POS terminals of the stores are low and a sales amount or the number of customers per POS terminal 12 is small as days of week and periods of time in which maintenance inspection is possible. In the example illustrated in FIG. 5, the periods of time in which customers can be treated using one POS terminal 12, as indicated by "○", are determined to be the days of week and the periods of time in which maintenance inspection is possible.

The maintenance worker contacts a person in charge of the store to inform the person of the days of week and the periods of time determined for the maintenance inspection as candidates for days of the maintenance inspection. In this case, since appointment for the days of week determined for the maintenance inspection is made, the appointment can be easily established.

The maintenance worker visits the store in the days of week in which the appointment is established to perform maintenance inspection work. When the maintenance inspection work is performed on the POS terminals 12, a history in which the maintenance inspection work is performed on the POS terminals 12 is transmitted to the POS maintenance computer 21 via the store computer 11. Thus, the history can be referred to in next maintenance inspection work.

In this way, the server device according to the embodiment calculates the running rates by the periods (each day of week or each period of time) of the POS terminals 12 in the store so that the running rates can be referred to in appointment work. Thus, by checking timings at which the running rates are low in advance in adjustment of days in which maintenance inspection is performed, it is possible to make a suggestion to avoid busy timings of the stores for the maintenance inspection work. Thus, the appointment can be easily established.

In the embodiment, as described above, the POS terminal 12 is an example of an information processing device, but an exemplary embodiment is not limited thereto and can be applied to various information processing devices such as a handy terminal and printer.

While certain embodiments have been described these embodiments have been presented by way of example only, and are not intended to limit the scope of the inventions. Indeed, the novel embodiments described herein may be embodied in a variety of other forms: furthermore various omissions, substitutions and changes in the form of the embodiments described herein may be made without departing from the scope of the inventions. The accompanying claims and their equivalents are intended to cover such forms or modifications as would fall within the scope of the invention.

## Claims

1. A server device comprising:
a data reception unit configured to receive an input of operation data applied to operate an information processing device that performs a predetermined process;
a running situation collection unit configured to collect running situations by periods of the information processing device based on the operation data; and
a running situation output unit configured to output the running situations by the periods of the information processing device.

2. The server device according to claim 1, wherein
the operation data is processing time information indicating a time in which the information processing device performs the predetermined process, and
the running situation collection unit collects the running situations by periods of the information processing device based on the processing time information.

3. The server device according to claim 1 or 2, wherein
the operation data is login time information indicating a time for login taken for the information processing device to perform the predetermined process, and
the running situation collection unit collects the running situations by periods of the information processing device based on the login time information.

4. The server device according to any one of claims 1 to 3, wherein
the operation data is power-on time information indicating a power-on time taken for the information processing device to perform the predetermined process, and
the running situation collection unit collects the running situations by periods of the information processing device based on the power-on time information.

5. The server device according to any one of claims 1 to 4, wherein
the operation data includes a history in which maintenance inspection work is performed.

6. A method causes a computer to function as:
a data reception unit configured to receive an input of operation data applied to operate an information processing device that performs a predetermined process;
a running situation collection unit configured to collect running situations by periods of the information processing device based on the operation data; and
a running situation output unit configured to output the running situations by the periods of the information processing device.

7. The method according to claim 6, wherein the operation data is processing time information indicating a time in which the information processing device performs the predetermined process.

8. The method according to claim 6 or 7, wherein the operation data is login time information indicating a time for login taken for the information processing device to perform the predetermined process.

9. The method according to any one of claims 6 to 8, wherein the operation data is power-on time information indicating a power-on time taken for the information processing device to perform the predetermined process.

10. The method according to any one of claims 6 to 9, wherein the operation data includes a history in which maintenance inspection work is performed.

11. A non-transitory computer readable medium storing a program causing a computer to execute the method according to any one of claims 6 to 10.
